# EUROPEAN PATENT APPLICATION

(11) **EP 2 910 823 A1**
(43) Date of publication of application: **26.08.2015**
(21) Application number: 13847540.5
(22) Date of filing: 10.10.2013
(51) Int. Cl.: F16J 15/34

(54) **BELLOWS SEAL**

(30) Priority: 19.10.2012 JP 2012232435
(71) Applicant: EagleBurgmann Japan Co., Ltd., Tokyo 105-8587 (JP)
(72) Inventor: TAKAHASHI Hidekazu, Tokyo 105-8587 (JP)
(74) Representative: WSL Patentanwälte Partnerschaft mbB
(86) International application number: PCT/JP2013/077578
(87) International publication number: WO 2014/061543

(57) **Abstract**

{Technical Problem} Provide a bellows seal that prevents damage, due to shrink-fitting, to the stationary seal ring which is positioned on the inner periphery side of the seal cover via a bellows in a manner freely movable in the axial direction, while preventing stress-induced damage to the bellows and improving the sealing performance at the same time.

{Solution to Problem} The bellows seal is characterized by having a bellows 11 installed on the inner periphery side of the seal cover 3 between a seal cover 3 and first seal ring 8 in a manner freely extendable/contractible in the axial direction, as well as a spring 13 installed on the inner periphery side of the seal cover 3 to bias the first seal ring 8 in the direction of the second seal ring 9, wherein the first seal ring 8 is hermetically coupled by a lap joint to the end face of a retainer 12 fixed to the bellows 11, and the first seal ring 8 and retainer 12 are installed on the seal cover 3 side in a manner prevented from turning by a knock pin 17.

## Description

### {TECHNICAL FIELD}

The present invention relates to a bellows seal used for sealing high-pressure pumps, compressors, and other equipment that handle high-temperature, high-pressure liquids exceeding 200°C in oil refining, petrochemical, and iron and steel-making chemical applications, etc., such as hot oils used in decompression distillation facilities at oil refinery plants.

### {BACKGROUND ART}

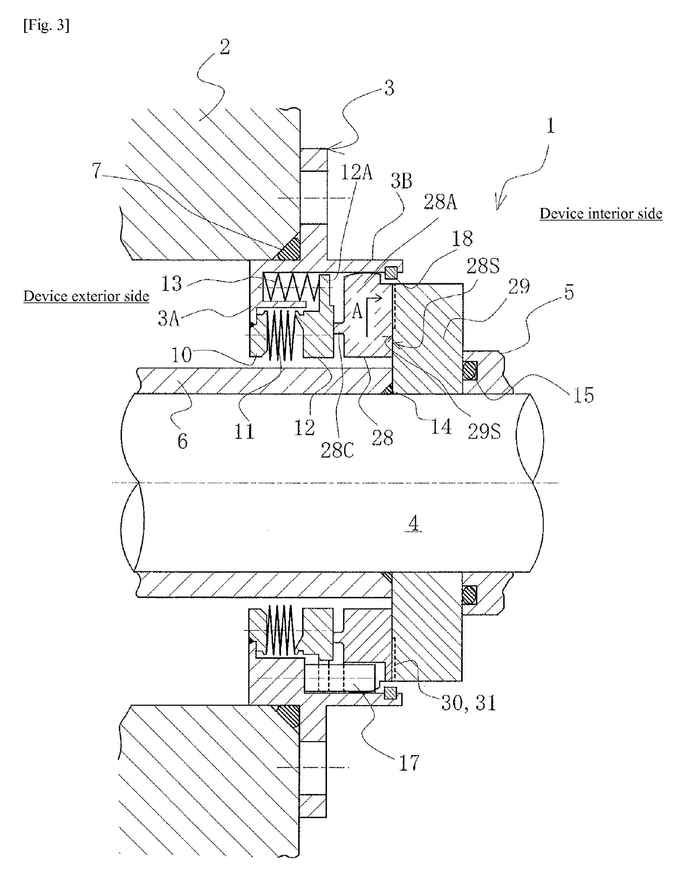

One of the traditionally known compact mechanical seal devices capable of sealing chemical agents and other special liquids and which can also be installed easily in devices, is the invention shown in FIG. 3 which is a mechanical seal device having: a seal cover 52 installed on the exterior surface of a rotational axis 51 in the axial direction, on a device main body 50 having an inner periphery through which the rotational axis 51 is inserted; a first seal ring 53 positioned on the inner periphery side of the seal cover 52 in a manner freely movable in the axial direction; a second seal ring 54 fixed to the rotational axis 51; a spring 55 positioned on the inner periphery side of the seal cover 52 to bias the first seal ring 53 in the direction of the second seal ring 54; and a bellows 56, adapter 57, and retainer 58 installed on the inner periphery side of the seal cover 52 between the seal cover 52 and first seal ring 53 in a manner freely extendable/contractible in the axial direction; wherein the spring 55 is installed on the seal cover along the axial direction in which the bellows 56 extends/contracts, with the first seal ring 53 fixed to the retainer 58 by means of shrink-fitting and the first seal ring 53 and retainer 58 installed on the seal cover 52 in a manner prevented from turning by a knock pin 59 (hereinafter referred to as "Prior Art 1"; refer to Patent Literature 1).

In addition, a lap joint structure is already known whose purpose is to solve the problems associated with the fixing of the aforementioned first seal ring 53 onto the retainer 58 by means of shrink-fitting, by lapping the contact surfaces of the first seal ring 53 and retainer 58 and then causing the lapped surfaces to contact each other to provide sealing (hereinafter referred to as "Prior Art 2"), such as the one described in Patent Literature 2, for example.

However, the mechanical seal of Prior Art 1, while making it possible to reduce the dimension of the bellows in the axial direction compared to before because a sufficient pressure on the first seal ring can be ensured by the pressure of the spring being installed on the seal cover and also because the bellows can be placed inside the mechanical seal device at near its free length, presents a problem in that the first seal ring may be damaged because the structure where the first seal ring is fixed to the retainer by means of shrink-fitting causes a compressive stress due to the shrink-fitting to always act upon the first seal ring.

On the other hand, the mechanical seal of Prior Art 2, while solving the problem of Prior Art 1 relating to the shrink-fitting of the first seal ring onto the retainer, presents a problem in that the seal areas of the first seal ring and second seal ring, and lapped surfaces of the first seal ring and retainer, do not provide sufficient sealing performance because, as the first seal ring and retainer adopt a lap joint structure, no countermeasures are taken for the first seal ring to withstand the pressure of the sealed fluid.

### {PRIOR ART LITERATURES}

### {Patent Literatures}

Patent Literature 1: PCT International Patent Laid-open Domestic Re-publication No. WO2010/004809
Patent Literature 2: Japanese Examined Utility Model Laid-open No. Hei 6-31252

### {SUMMARY OF INVENTION}

### {PROBLEMS TO BE SOLVED BY INVENTION}

An object of the present invention is to provide a bellows seal used for sealing high-pressure pumps, compressors, and other equipment that handle high-temperature, high-pressure liquids exceeding 200°C in oil refining, petrochemical, and iron and steel-making chemical applications, etc., such as hot oils used in decompression distillation facilities at oil refinery plants, where such bellows seal prevents damage, due to shrink-fitting, to the stationary seal ring which is positioned on the inner periphery side of the seal cover via a bellows in a manner freely movable in the axial direction, while preventing stress-induced damage to the bellows and improving the sealing performance at the same time.

### {MEANS TO SOLVE PROBLEMS}

To achieve the aforementioned object, firstly the bellows seal proposed by the present invention is characterized by having: a seal cover formed between a housing and rotational axis and installed in a seal cavity; a first seal ring positioned on the inner periphery side of the seal cover in a manner freely movable in the axial direction; a second seal ring fixed to the rotational axis; a bellows installed on the inner periphery side of the seal cover between the seal cover and first seal ring in a manner freely extendable/contractible in the axial direction; and a spring positioned on the inner periphery side of the seal cover to bias the first seal ring in the direction of the second seal ring; wherein the first seal ring is hermetically coupled by a lap joint to the end face of a retainer fixed to the bellows, and the first seal ring and retainer are installed on the seal cover side in a manner prevented from turning by a knock pin.

According to these features, the spring exerts sufficient pressure on the first seal ring and therefore the bellows need not exert virtually any pressure on the first seal ring, which in turn allows the bellows to be installed in a state of near free length and any internal stress resulting from the compression of the bellows can be minimized, and as a result the number of bellows pleats can be reduced to lower the bellows production cost and also make the bellows seal compact.

In addition, because the torque generated by the sliding of the first seal ring is received by the knock pin and does not act upon the bellows, any fluctuation of the sliding torque does not affect the bellows which only receives the stress generated by the sealed fluid and the minimum internal stress from compression, which means that the compound stress can be minimized and capacity to withstand pressure can be improved.

Furthermore, because the first seal ring is structured in such a way that it is hermetically coupled to the retainer via a lap joint, no compressive stress acts upon the first seal ring due to shrink-fitting unlike in the case of Prior Art 1 and therefore damage due to compressive stress can be prevented. Moreover, the first seal ring has a standalone structure and therefore any change in flatness due to heat can be minimized.

In addition, secondly, the bellows seal proposed by the present invention is characterized, in addition to the first features, in that the first seal ring has a step that projects toward the retainer side and in that the inner diameter of the step that projects toward the retainer side is set to that of the center diameter of the bellows or more.

According to these features, biasing force by pressure is added via the bellows to the contact part on the inner periphery side of the step that projects toward the retainer side and therefore sufficient sealing performance of the first seal ring and retainer can be maintained.

In addition, thirdly, the bellows seal proposed by the present invention is characterized, in addition to the first or second features, in that the first seal ring is set in such a way that its centroid in a section cut in the axial direction is positioned on the opposite side of the second seal ring with respect to the center between the second seal ring and retainer.

According to these features, the first seal ring slidingly contacts the second seal ring at the height of the outer periphery and therefore the sealing performance of the sealing faces of the first seal ring and second seal ring can be improved.

In addition, fourthly, the bellows seal proposed by the present invention is characterized, in addition to the second or third features, in that the first seal ring is formed in such a way that its main body has a shape roughly symmetrical with respect to the centroid, that it has a step that projects from its main body toward the second seal ring side, and in that the height of the step that projects toward the second seal ring side is set greater than the height of the step that projects toward the retainer side.

According to these features, the centroid of the first seal ring can be displaced toward the opposite side of the second seal ring without impairing the function of the first seal ring.

In addition, fifthly, the bellows seal proposed by the present invention is characterized, in addition to the fourth features, in that the width in the diameter direction of the step of the first seal ring that projects toward the retainer side is set smaller than the width in the diameter direction of the step that projects toward the second seal ring side.

According to these features, the face pressure between the step that projects toward the retainer side and the retainer becomes greater than the face pressure between the first seal ring and second seal ring, which improves the sealing performance of the first seal ring and retainer.

### {Effects of Invention}

The present invention provides excellent effects as described below.
(1) The spring exerts sufficient pressure on the first seal ring and therefore the bellows need not exert virtually any pressure on the first seal ring, which in turn allows the bellows to be installed in a state of near free length and any internal stress resulting from the compression of the bellows can be minimized, and as a result the number of bellows pleats can be reduced to lower the bellows production cost and also make the bellows seal compact.
   In addition, because the torque generated by the sliding of the first seal ring is received by the knock pin and does not act upon the bellows, any fluctuation of the sliding torque does not affect the bellows which only receives the stress generated by the sealed fluid and the minimum internal stress from compression, which means that the compound stress can be minimized and capacity to withstand pressure can be improved.
   Furthermore, because the first seal ring is structured in such a way that it is hermetically coupled to the retainer via a lap joint, no compressive stress acts upon the first seal ring due to shrink-fitting unlike in the case of Prior Art 1 and therefore damage due to compressive stress can be prevented. Moreover, the first seal ring has a standalone structure and therefore any change in flatness due to heat can be minimized.
(2) The first seal ring has a step that projects toward the retainer side and the inner diameter of the step that projects toward the retainer side is set to that of the center diameter of the bellows or more, and accordingly biasing force by pressure is added via the bellows to the contact part on the inner periphery side of the step that projects toward the retainer side and therefore sufficient sealing performance of the first seal ring and retainer can be maintained.
(3) The centroid of the first seal ring in a section cut in the axial direction is positioned on the opposite side of the second seal ring, and accordingly the first seal ring slidingly contacts the second seal ring at the height of the outer periphery and therefore the sealing performance of the sealing faces of the first seal ring and second seal ring can be improved.
(4) The height of the step that projects toward the second seal ring side is set greater than the height of the step that projects toward the retainer side, and accordingly the centroid of the first seal ring can be displaced toward the opposite side of the second seal ring without impairing the function of the first seal ring.
(5) The width in the diameter direction of the step of the first seal ring that projects toward the retainer side is set smaller than the width in the diameter direction of the step that projects toward the moving surface side, and accordingly the face pressure between the step that projects toward the retainer side and the retainer becomes greater than the face pressure between the first seal ring and second seal ring, which improves the sealing performance of the first seal ring and retainer.

### {BRIEF DESCRIPTION OF DRAWINGS}

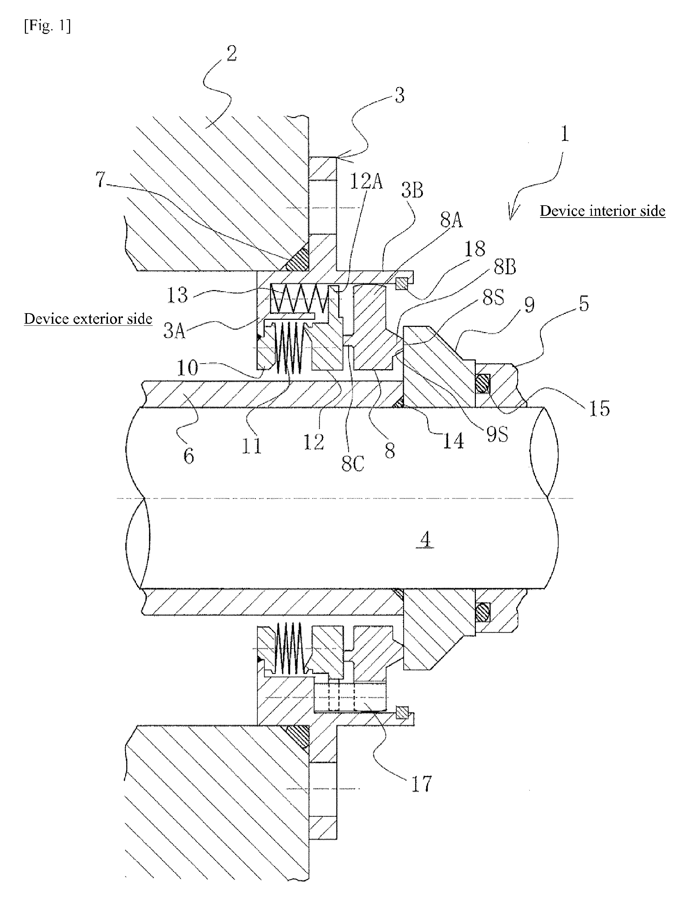

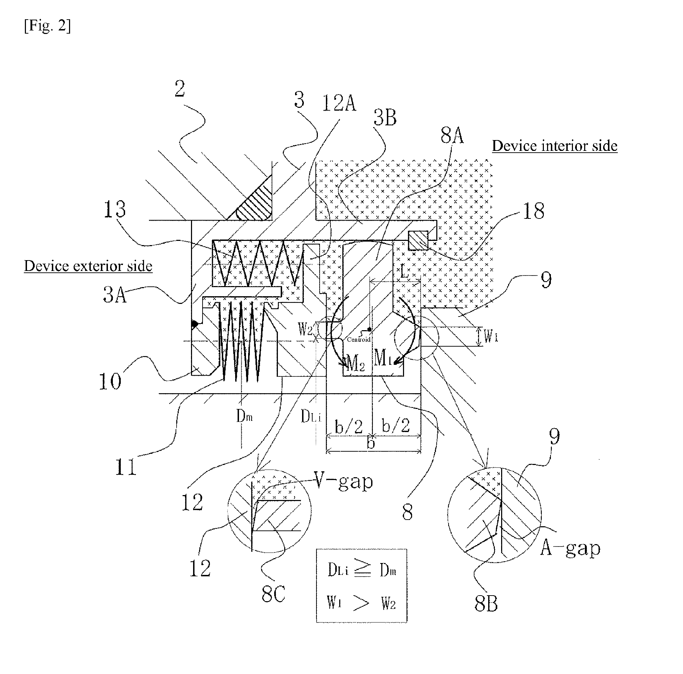

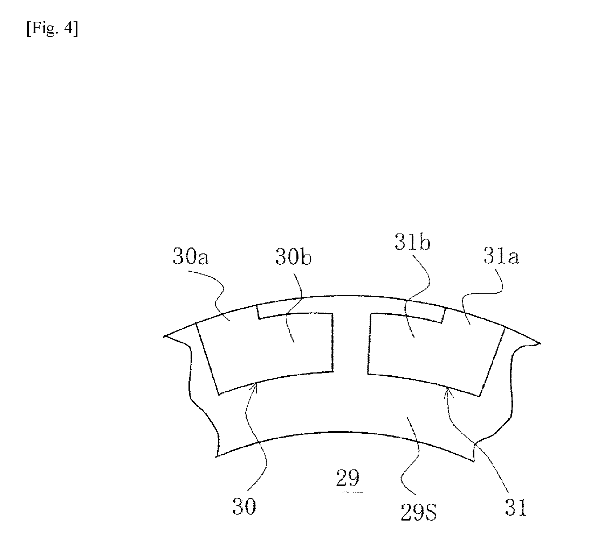

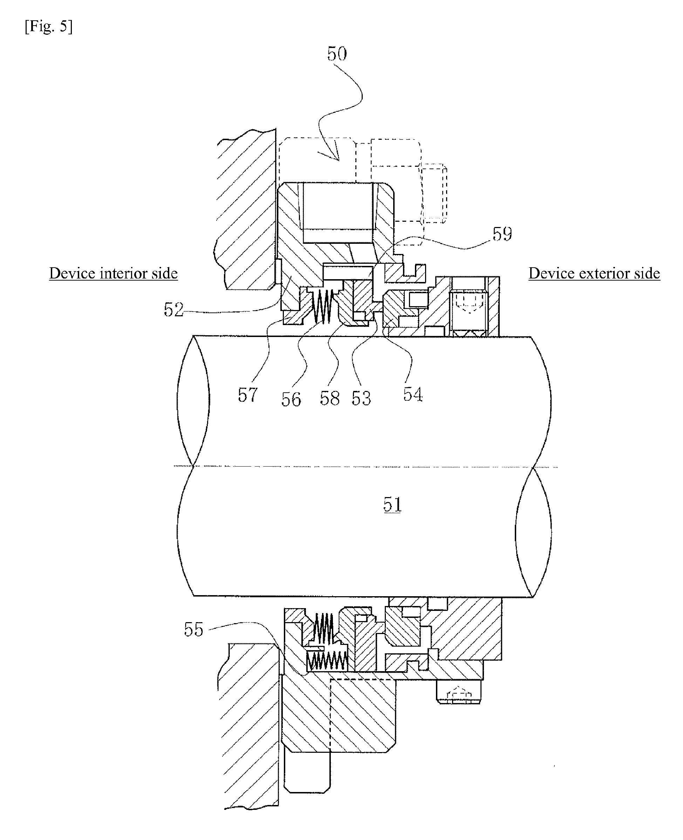

{FIG. 1} is a longitudinal section view explaining the bellows seal pertaining to Embodiment 1 of the present invention in its entirety.
{FIG. 2} is an enlarged view of key areas showing the key areas in FIG. 1 in close-up.
{FIG. 3} is a longitudinal section view explaining the bellows seal pertaining to Embodiment 2 of the present invention in its entirety.
{FIG. 4} is a view from A in FIG. 2.
{FIG. 5} is a longitudinal section view explaining the bellows seal of Prior Art 1 in its entirety.

### {MODES FOR CARRYING OUT THE INVENTION}

Modes for carrying out a bellows seal conforming to the present invention are explained in detail by referring to the drawings, but it should be noted that they do not limit the interpretation of the present invention and various changes, modifications, and improvements may be added based on the knowledge of those skilled in the art so long as they do not deviate from the scope of the present invention.

### {Embodiment 1}

The bellows seal according to Embodiment 1 of the present invention is explained by referring to Figs. 1 and 2.

In FIG. 1, reference symbol 1 represents a bellows seal used for sealing the device interior side of a housing 2 from the device exterior side of pumps and other equipment that handle high-pressure, high-temperature liquids exceeding 200°C in oil refining, petrochemical, and iron and steel-making chemical applications, etc., such as hot oils used in decompression distillation facilities at oil refinery plants. The right side of the figure indicates the device interior side (high-pressure fluid side), while the left side of the figure indicates the device exterior side (atmosphere side).

The bellows seal 1 has a seal cover 3 installed on a housing 2 in a seal cavity formed between the housing 2 and a rotational axis 4, as well as a sleeve collar 5 and sleeve 6 fitted on the rotational axis 4. The seal cover 3 is hermetically installed on the housing 2 via an O-ring 7 by a bolt or other fixing means (not illustrated).

Arranged on the inner periphery side of the seal cover 3 are a seal ring 8 constituting a first seal ring, mating ring 9 constituting a second seal ring, adapter 10, bellows 11, retainer 12 and spring 13.

The bellows 11 is installed between the adapter 10 and retainer 12 in a manner freely extendable/contractible along the axial direction of the rotational axis 4. The metal that constitutes the bellows 11 is fabricated from an alloy such as stainless steel, Inconel, Hastelloy, or Carpenter, or titanium, etc. The bellows 11 is fixed with the adapter 10 and retainer 12 by means of welding, for example.

Multiple springs 13 are placed on the inner periphery of the seal cover 3 in the circumferential direction on the exterior side of the bellows 11 in the radius direction. The number of springs 13 is not limited in any way, but it is usually 4 to 24.

The mating ring 9, contacting the end face of the sleeve 6 on one end via an O-ring 14 while contacting the sleeve collar 5 on the other end via an O-ring 15, is fixed to the rotational axis 4 in a manner being sandwiched between the sleeve 6 and sleeve collar 5 and rotates according to the rotation of the rotational axis 4. A sealing face 9S is formed on the side face of the mating ring 9 that faces the seal ring 8 side, and it slides in a rotating manner while in contact with a sealing face 8S of the seal ring 8. The mating ring 9 is fabricated from superhard material SiC (silicon carbide) or WC (tungsten carbide), carbon, or other ceramics, etc.

A projection 3A that projects toward the interior side in the radius direction is formed on the inner periphery of the seal cover 3. The adapter 10 that retains one end of the bellows 11 is engaged with, and fixed by means of welding to, the inner periphery surface of the projection 3A and the side face of the projection 3A on the device interior side. Also formed on the inner periphery of the seal cover 3 is a cylinder 3B that extends toward the device interior side in the axial direction and covers the outer periphery surface of the seal ring 8.

The retainer 12 is fixed to the other end of the bellows 11. Formed on the retainer 12 is a projection 12A that extends toward the exterior side in its radius direction, and the projection 12A and seal ring 8 are installed on the interior side face of the seal cover 3 in a manner prevented from turning by a knock pin 17. Additionally, the spring 13 is placed between the projection 12A and the interior side face of the seal cover 3, and this spring 13 biases the projection 12A toward the mating ring 9 side along the axial direction of the rotational axis 4, with the seal ring 8 biased toward the mating ring 9 side via the projection 12A along the axial direction of the rotational axis 4. As a result, the sealing face 8S of the seal ring 8 slides against, while being in contact with, the sealing face 9S of the mating ring 9 facing it.

The seal ring 8 is such that its main body 8A is formed to a shape roughly symmetrical to the centroid and so that it has a step 8B that projects from the main body 8A toward the mating ring 9 side as well as a step 8C that projects toward the retainer 12 side. The tip of the step 8B forms the sealing face 8S that slides against, while in contact with, the sealing face 9S of the mating ring 9 facing it. On the other hand, the tip of the step 8C is in contact with the retainer 12. The tip of the step 8C, and the end face of the retainer 12 contacting the tip of the step 8C, are lapped and the lapped surfaces of the two are hermetically coupled via a lap joint. The seal ring 8 is fabricated from superhard material SiC (silicon carbide) or WC (tungsten carbide), carbon, or other ceramics, etc.

The gap between the outer periphery of the seal ring 8 on one hand and the inner periphery of the cylinder 3B covering the outer periphery surface of the seal ring 8 of the seal cover 3 on the other is minimized to reduce the amount of displacement of the seal ring 8 in the diameter direction. In addition, a snap ring 18 is installed on the inner periphery surface of the cylinder 3B on the tip side.

As shown in FIG. 2, the seal ring 8 is set in such a way that its centroid in a section cut in the axial direction is positioned on the retainer 12 side, or specifically on the opposite side of the mating ring 9, with respect to the center between the mating ring 9 and retainer 12. To be specific, L > b / 2 is satisfied, where L represents the distance from the mating ring 9 side to the centroid, while b represents the distance between the mating ring 9 and retainer 12. In this example, this displacement of the centroid toward the opposite side of the mating ring 9 is due to the fact that the step 8B that projects toward the mating ring 9 side from the main body 8A of the seal ring 8 having a roughly symmetrical shape is set to project higher than the step 8C that projects toward the retainer 12 side. Since the cross-section area of the step 8B and that of the step 8C are sufficiently small relative to the main body 8A, setting the height of the step 8B greater than the height of the step 8C causes the centroid of the main body 8A to displace toward the opposite side of the mating ring 9 and consequently the overall centroid in the section cut in the axial direction of the seal ring 8 is displaced toward the opposite side of the mating ring 9 with respect to the center between the mating ring 9 and retainer 12.

Also, as shown in FIG. 2, the inner diameter D_{Li} of the step 8C that projects toward the retainer 12 side of the seal ring 8 is set to that of the center diameter Dₘ of the bellows 11 or more. In addition, the width W₂ in the diameter direction of the step 8C that projects toward the retainer 12 side of the seal ring 8 is set smaller than the width W₁ in the diameter direction of the step 8B that projects toward the mating ring 9 side.

On the bellows seal 1 thus constituted, a spring 13 is installed on the inner periphery side of the seal cover 3 along the axial direction of the rotational axis 4 in which the bellows 11 extends/contracts. Since the spring 13 exerts sufficient pressure on the seal ring 8 via the retainer 12, the bellows 11 need not exert virtually any pressure on the seal ring 8. As a result, the bellows 11 can be installed in a state of near free length and any internal stress resulting from the compression of the bellows 11 can be minimized. This means that the number of bellows 11 pleats can be reduced to lower the bellows 11 production cost. The bellows seal 1 can be made compact, too. The number of bellows 11 pleats is desirably 6 or less, or preferably 4.

Furthermore, because the seal ring 8 is structured in such a way that it is hermetically coupled to the retainer 12 via a lap joint, no compressive stress acts upon the seal ring 8 due to shrink-fitting unlike in the case of Prior Art 1 and therefore damage due to compressive stress can be prevented. Moreover, the seal ring 8 has a standalone structure and therefore any change in flatness due to heat can be minimized.

In addition, because the retainer 12 and seal ring 8 are installed on the interior side face of the seal cover 3 in a manner prevented from turning by the knock pin 17, torque generated by the sliding of the seal ring 8 is received by the knock pin 17 and does not act upon the bellows 11, which means that any fluctuation of the sliding torque does not affect the bellows 11. Accordingly, the bellows 11 only receives the stress generated by the sealed fluid and the minimum internal stress from compression, and consequently the compound stress can be minimized and capacity to withstand pressure can be improved.

Furthermore, as shown in FIG. 2, the seal ring 8 is set in such a way that its centroid in a section cut in the axial direction is positioned on the retainer 12 side, or specifically on the opposite side of the mating ring 9, with respect to the center between the mating ring 9 and retainer 12, and therefore when the pressure of the sealed fluid acts upon the outer periphery surface of the seal ring 8 as a uniformly distributed load, a clockwise moment M₁ around the fulcrum on the retainer 12 side generates along with a counterclockwise moment M₂ around the fulcrum on the mating ring 9 side, in the relationship of M₁ > M₂, meaning that the step 8B that projects toward the mating ring 9 side of the seal ring 8 is higher on the outer periphery (this condition is referred to as outer periphery contact or A-gap), while the step 8C that projects toward the retainer 12 side of the seal ring 8 is higher on the inner periphery (this condition is referred to as inner periphery contact or V-gap). As a result, sealing performance of the sealing faces of the seal ring 8 and mating ring 9 can be improved.

The displacement, in the opposite direction of the mating ring 9, of the centroid of the seal ring in a section cut in the axial direction happens because the height of the step 8B that projects toward the mating ring 9 side from the main body 8A of the seal ring 8 having a roughly symmetrical shape is set greater than the height of the step 8C that projects toward the retainer 12 side, which means that it can be achieved without impairing the function of the seal ring.

In addition, because the inner diameter D_{Li} of the step 8C that projects toward the retainer 12 side of the seal ring 8 is set to that of the center diameter Dₘ of the bellows 11 or more, biasing force by pressure is added via the bellows 11 to the contact part on the inner periphery side of the step 8C and therefore sufficient sealing performance of the seal ring 8 and retainer 12 can be maintained.

Additionally, because the width W₂ in the diameter direction of the step 8C that projects toward the retainer 12 side of the seal ring 8 is set smaller than the width W₁ in the diameter direction of the step 8B that projects toward the mating ring 9 side, the face pressure between the step 8C and retainer 12 becomes greater than the face pressure between the seal ring 8 and mating ring 9, which improves the sealing performance of the seal ring 8 and retainer 12.

### {Embodiment 2}

The bellows seal according to Embodiment 2 of the present invention is explained by referring to Figs. 3 and 4.

The bellows seal according to Embodiment 2 is different from Embodiment 1 in terms of the shape and structure of the seal ring that constitutes the first seal ring and the shape and structure of the mating ring that constitutes the second seal ring, but the remainder is the same as those of Embodiment 1 and the same symbols represent the same members in Figs. 3 and 4 as they represent in Figs. 1 and 2, so duplicate explanations are omitted.

The following primarily explains the parts different from Embodiment 1.

In FIG. 3, a seal ring 28 is such that the cross-section shape of its main body 28A is roughly rectangular and a sealing face 28S on a mating ring 29 side of the main body 28A has a planar shape, while a projecting step 28C is provided on the surface of the main body 28A on the retainer 12 side. A sealing face 28S is in contact with a sealing face 29S of the mating ring 29 facing it. The tip of the step 28C also contacts the retainer 12. The tip of the step 28C, and the end face of the retainer 12 contacting the tip of the step 28C, are lapped and the lapped surfaces of the two are hermetically coupled via a lap joint.

The mating ring 29 has a cross-section shape which is roughly rectangular and the sealing face 29S on the seal ring 28 side is shaped in a manner closely contactable with the surface 28S of the seal ring 28 roughly over its entirety.

As shown in FIG. 4, multiple dynamic-pressure generation grooves 30, 31 are formed alternately on the sealing face 29S of the mating ring 29 in the circumferential direction, where the grooves have roughly L-shaped flex shapes that are symmetrical in the circumferential direction. These dynamic-pressure generation grooves 30, 31 consist of parts 30a, 31a that extend from the outer periphery surface in a radial direction and parts 30b, 31b that extend further in the circumferential direction, where the parts 30b, 31b that extend in the circumferential direction have inclined surfaces whose groove bottoms become gradually shallower toward the ends on the opposite sides of the parts 30a, 31a that extend in a radial direction.

The dynamic-pressure generation grooves 30, 31 are micromachined to the order of µm to a very small depth.

Note that the dynamic-pressure generation grooves 30, 31 shown in FIG. 4 are only examples and they may be dimples or Rayleigh steps, for example, so long as their shape is such that dynamic pressure is generated as a result of relative movement with the seal ring.

The bellows seal according to Embodiment 2 having the aforementioned constitution is such that, when the mating ring 29 rotates together with the rotational axis 4, the dynamic-pressure generation grooves 30, 31 on its sealing face 29S cause the fluid (sealed fluid) present between them and the sealing face 28S of the seal ring 28 to generate dynamic pressure. To be specific, the dynamic-pressure generation grooves 30, 31 have inclined surfaces whose groove bottoms at the parts 30b, 31b that extend in their circumferential direction become gradually shallower toward the end, and therefore the fluid in the device that has entered these grooves is compressed as a result of relative movement between them and the sealing face 28S of the seal ring 28 and consequently dynamic pressure generates in the thrust direction.

Then, this dynamic pressure causes the seal ring 28 to separate slightly from the sealing face 29S of the mating ring 29 by resisting the biasing force toward the mating ring 29 by the coil spring 13, and as a result a small gap is formed between the sealing faces 28S, 29S of the mating ring 29 and seal ring 28 and the shaft seal function is exhibited in this gap while allowing for slight leakage of the sealed fluid.

As described above, the bellows seal 1 of Embodiment 2 adopts a lap joint structure for a non-contact seal.

The bellows seal 1 of Embodiment 2 having the aforementioned constitution adopts a lap joint structure for a non-contact seal and therefore it prevents the sealing face of the seal ring from being worn during rotation compared to the contact seal of Embodiment 1. In addition, the bellows seal 1 of Embodiment 2 has the same effects as explained below that are provided by Embodiment 1.

To be specific, the spring 13 is installed on the inner periphery side of the seal cover 3 along the axial direction of the rotational axis 4 in which the bellows 11 extends/contracts, and since the spring 13 exerts sufficient pressure on the seal ring 8 via the retainer 12, the bellows 11 need not exert virtually any pressure on the seal ring 8. As a result, the bellows 11 can be installed in a state of near free length and any internal stress resulting from the compression of the bellows 11 can be minimized. This means that the number of bellows 11 pleats can be reduced to lower the bellows 11 production cost. The bellows seal 1 can be made compact, too. The number of bellows 11 pleats is desirably 6 or less, or preferably 4.

Furthermore, because the seal ring 28 is structured in such a way that it is hermetically coupled to the retainer 12 via a lap joint, no compressive stress acts upon the seal ring 28 due to shrink-fitting unlike in the case of Prior Art 1 and therefore damage due to compressive stress can be prevented. Moreover, the seal ring 28 has a standalone structure and therefore any change in flatness due to heat can be minimized.

In addition, because the retainer 12 and seal ring 28 are installed on the interior side face of the seal cover 3 in a manner prevented from turning by the knock pin 17, torque generated by the sliding of the seal ring 28 is received by the knock pin 17 and does not act upon the bellows 11, which means that any fluctuation of the sliding torque does not affect the bellows 11. Accordingly, the bellows 11 only receives the stress generated by the sealed fluid and the minimum internal stress from compression, and consequently the compound stress can be minimized and capacity to withstand pressure can be improved.

The foregoing explained embodiments of the present invention using drawings, but specific constitutions are not limited to these embodiments and changes and additions are also included in the present invention so long as they do not deviate from the key points of the present invention.

For example, as Embodiment 1 above explained a contact seal, while Embodiment 2 above explained a non-contact seal, the present invention can be applied to either a contact seal or non-contact seal.

In the case of a contact seal, as in Embodiment 1, sealing performance of the sealing faces of the seal ring 8 and mating ring 9 can be improved by setting the centroid of the seal ring 8 in a section cut in the axial direction to be positioned on the opposite side of the mating ring 9.

Additionally in Embodiment 1 above, the displacement, in the opposite direction of the mating ring side, of the centroid of the seal ring 8 in a section cut in the axial direction happens because, for example, the height of the step 8B that projects toward the mating ring 9 side from the main body 8A of the seal ring 8 having a roughly symmetrical shape is set greater than the height of the step 8C that projects toward the retainer 12 side; however, the present invention is not limited to the foregoing and, for example, the main body 8A can have an asymmetrical shape with the retainer 12 side having a greater cross-section area, or the cross-section area of the base of the step 8C can be increased so that the cross-section area of the step 8C becomes greater than the cross-section area of the step 8B.

### {REFERENCE SIGNS}

- 1: Bellows seal
- 2: Housing
- 3: Seal cover
- 4: Rotational axis
- 5: Sleeve collar
- 6: Sleeve
- 7: O-ring
- 8, 28: Seal ring (first seal ring)
- 8A, 28A: Main body of the seal ring
- 8B: Step that projects toward the mating ring side
- 8C, 28C: Step that projects toward the retainer side
- 8S: Sealing face of the seal ring
- 28S: Sealing face of the seal ring
- 9, 29: Mating ring (second seal ring)
- 9S: Sealing face of the mating ring
- 29S: Sealing face of the mating ring
- 10: Adapter
- 11: Bellows
- 12: Retainer
- 13: Spring
- 14: O-ring
- 15: O-ring
- 17: Knock pin
- 18: Snap ring
- 30, 31: Dynamic-pressure generation groove
- L: Distance from the mating ring side to the centroid of the seal ring
- b: Distance between the mating ring and retainer
- D_{Li}: Inner diameter of the step that projects toward the retainer side of the seal ring
- Dₘ: Center diameter of the bellows
- W₁: Width in the diameter direction of the step that projects toward the mating ring side of the seal ring
- W₂: Width in the diameter direction of the step that projects toward the retainer side of the seal ring

## Claims

1. A bellows seal **characterized by** having:
a seal cover formed between a housing and rotational axis and installed in a seal cavity;
a first seal ring positioned on an inner periphery side of the seal cover in a manner freely movable in an axial direction;
a second seal ring fixed to the rotational axis;
a bellows installed on the inner periphery side of the seal cover between the seal cover and first seal ring in a manner freely extendable/contractible in the axial direction; and
a spring positioned on the inner periphery side of the seal cover to bias the first seal ring in a direction of the second seal ring;
wherein the first seal ring is hermetically coupled by a lap joint to an end face of a retainer fixed to the bellows, and the first seal ring and retainer are installed on a seal cover side in a manner prevented from turning by a knock pin.

2. A bellows seal according to Claim 1, **characterized in that** the first seal ring has a step that projects toward a retainer side and **in that** an inner diameter of the step that projects toward the retainer side is set to that of a center diameter of the bellows or more.

3. A bellows seal according to Claim 1 or 2, **characterized in that** the first seal ring is set in such a way that its centroid in a section cut in the axial direction is positioned on an opposite side of the second seal ring with respect to a center between the second seal ring and retainer.

4. A bellows seal according to Claim 2 or 3, **characterized in that** the first seal ring is formed in such a way that its main body has a shape roughly symmetrical to the centroid, **in that** it has a step that projects from its main body toward a second seal ring side, and **in that** a height of the step that projects toward the second seal ring side is set greater than a height of the step that projects toward the retainer side.

5. A bellows seal according to Claim 4, **characterized in that** a width in a diameter direction of the step of the first seal ring that projects toward the retainer side is set smaller than a width in a diameter direction of the step that projects toward the second seal ring side.
